# EUROPEAN PATENT APPLICATION

(11) **EP 4 763 016 A1**
(43) Date of publication of application: **24.06.2026**
(21) Application number: 24221615.8
(22) Date of filing: 19.12.2024
(51) Int. Cl.: A47J 43/07

(54) **METHOD AND CONTROL UNIT FOR OPERATING A KITCHEN APPLIANCE**

(71) Applicant: BSH Hausgeräte GmbH, 81739 München (DE)
(72) Inventor: Brinovsek, Luka, 2259 Ivanjkovci (SI); Rupnik, David, 3222 Dramlje (SI); Tostovrsnik, Miha, 3333 Ljubno ob Savinji (SI)

(57) **Abstract**

A control unit (101) for a kitchen appliance (100) is described, wherein the kitchen appliance (100) comprises a drive unit (120) configured to drive a slicing tool (107), and wherein the slicing tool (107) is configured to produce slices of a food item. The control unit (101) is configured to capture drive data with regard to the drive unit (120) while driving the slicing tool (107), using one or more sensors (131, 132, 133), and to determine slice information with regard to the number of slices that have been produced by the slicing tool (107) based on the drive data. Furthermore, the control unit (101) is configured to operate the kitchen appliance (100) in dependence of the slice information.

## Description

The present document relates to a kitchen appliance. In particular, the present document relates to increasing the comfort-of-use of a kitchen appliance.

A kitchen appliance may be configured to process a food item which is placed in or above the receptacle of the appliance using one or more (possibly interchangeable) tools. Exemplary tools are a knife, a shredder, a dough hook, a slicing tool, etc. The kitchen appliance may comprise a user interface which enables a user to select an operation program and/or an operation parameter (such as the rotational speed of a tool and/or the temperature of a heating unit) of the kitchen appliance.

The kitchen appliance may be realized as a kitchen appliance (e.g. stand mixer) with a head unit, an upright support part and a base unit (pedestal). The head unit may be pivotable relative to the upright support part extending vertically from the base unit and supporting the head unit. An electric motor with or without a gear unit may be arranged in the head unit. An outlet for driving processing tools is positioned in the head unit above a receptacle (bowl). The outlet may be arranged on the upper or the lower side of the head unit or both in case of two or more outlets.

Such a kitchen appliance can be configured as a L-shaped kitchen appliance (stand mixer).

The present document addresses the technical problem of increasing the comfort-of-use of a kitchen appliance and/or the precision, with which food items may be processed by a kitchen appliance. The technical problem is solved by each one of the independent claims. Preferred examples are described in the dependent claims.

According to an aspect, a control unit for a kitchen appliance (e.g., for a food processor and/or for a cooking appliance and/or for a stand mixer) is described. The kitchen appliance comprises a drive unit configured to drive a slicing tool. The drive unit typically comprises an electric motor which is configured to cause the motor shaft of the motor to rotate (with a certain rotational speed). The motor shaft may be mechanically coupled to the slicing tool (notably to the tool shaft of the slicing tool), thereby causing the slicing tool to rotate. By way of example, the motor shaft may be mechanically coupled to the tool shaft of the slicing tool via a gear unit. The gear unit may have a transmission ratio, such that the rotational speed of the tool shaft and the rotational speed of the motor shaft are proportional to one another, wherein the proportionality factor is equal to the transmission ratio of the gear unit.

The kitchen appliance, in particular the drive unit, may comprise one or more sensors, which are each configured to capture sensor data that is indicative of the operation of the drive unit (while driving the slicing tool). The sensor data of the one or more sensors may be referred to herein as drive data. The drive data may be indicative of the position of the motor shaft and/or of the tool shaft (as a function of time), the rotational speed of the motor shaft and/or of the tool shaft (as a function of time), and/or the electric power (notably the electric current) used for operating the motor of the drive unit while driving the slicing tool (notably, when causing a rotation of the slicing tool). The electric power, notably the motor current, may be provided as a function of time.

The slicing tool is configured to produce slices of a food item. For this purpose, the slicing tool may comprise N (e.g., N≥1) slicing edges (e.g. knifes and/or blades) which are each configured to produce a slice of the food item, when the respective slicing edge interacts with the food item. The N slicing edges may be positioned at N different angular positions about the rotational axis (i.e., about the tool shaft) of the slicing tool.

The kitchen appliance may comprise an item area, within which the food item is to be placed (by a user of the kitchen appliance). The slicing tool may be rotated (by the drive unit) such that the N slicing edges sequentially pass through the item area, thereby sequentially causing the N slicing edges to interact with the food item, and thereby sequentially producing N slices of the food item (for each full rotation of the slicing tool). Hence, (exactly) N slices of the food item may be produced within each full rotation of the slicing tool.

The control unit is configured to capture drive data with regard to the drive unit while driving the slicing tool, using the one or more sensors. As indicated above, the drive data may be indicative of
- the position and/or the rotational speed of the motor shaft and/or of the tool shaft (as a function of time); and/or
- the electric power (notably the motor current) used for operating the motor of the drive unit (as a function of time).

Furthermore, the control unit is configured to determine slice information with regard to the number of slices that have been produced by the slicing tool, based on the drive data. The slice information may comprise a slice counter which is indicative of the cumulated number of slices that have been produced by the slicing tool (since start of operation of the kitchen appliance and/or of the drive unit).

The kitchen appliance may comprise a control element (as part of the user interface) for activating the kitchen appliance, and/or for causing the drive unit to drive the slicing tool. By way of example, the kitchen appliance may comprise a sensor which is configured to detect that the user presses the food item (which is placed within the item area) towards the slicing tool. This may automatically cause the drive unit to start operation for driving the slicing tool.

Furthermore, the drive unit is configured to operate the kitchen appliance in dependence of the slice information (notably in dependence of the slice counter). In particular, the control unit may be configured to output the slice counter (i.e., the value of the slice counter) via the user interface of the kitchen appliance. Alternatively, or in addition, the control unit may be configured to determine a target value for the number of slices to be produced (wherein the target value may have been set by the user via the user interface). Furthermore, the control unit may be configured to cause the drive unit to interrupt driving the slicing tool in dependence of the slice information and in dependence of the target value. In particular, the drive unit may be caused and/or triggered to interrupt driving the slicing tool, if (e.g., as soon as) the slice information indicates that the target value of the number of produced slices has been or will be reached.

As a result of this, a particularly comfortable, efficient and precise operation of a kitchen appliance is provided.

As indicated above, the drive unit may be configured to drive the rotation of the slicing tool. In other words, the drive unit may cause the slicing tool to rotate (about the rotational axis of the slicing tool, which typically corresponds to the tool shaft). The slicing tool may be configured to produce N slices of the food item within each full rotation of the slicing tool, with N≥ 1.

The one or more sensors may be configured to capture drive data which is indicative of the number of rotations of the slicing tool, which are caused by the drive unit. The control unit may be configured to capture the drive data using
- a position sensor (e.g., a Hall sensor) of the motor shaft which is driven by the motor of the drive unit, and/or
- a position sensor (e.g., a Hall sensor) of the tool shaft of the slicing tool, which is driven by the motor shaft via the gear unit.

The control unit may be configured to increase the slice counter by (exactly) N, for each full rotation of the slicing tool indicated by the drive data. By doing this, the slice counter may be updated in an efficient and precise manner.

The interaction between a slicing edge of the slicing tool and the food item typically leads to a momentary increase of the (mechanical) load of the drive unit. The drive data may be indicative of the load of the drive unit (as a function of time) while driving the slicing tool. The control unit may be configured to capture the drive data using
- a position sensor (e.g., a Hall sensor) of the motor shaft which is driven by the motor of the drive unit (as a function of time). The position sensor preferably has an angular resolution with regard to the rotation of the slicing tool, which is 10° or finer; and/or
- a current sensor which is configured to sense the motor current of the motor (as a function of time).

The momentary increase of the (mechanical) load of the drive unit may lead to a pulse within the drive data. The control unit may be configured to detect a pulse within the drive data, which is indicative of a momentary increase of the load of the drive unit. Furthermore, the control unit may be configured to increase the slice counter, in particular by (exactly) one, in reaction to detecting a pulse within the drive data. Hence, each pulse within the drive data (indicative of a momentary increase of the load of the drive unit) may lead to an increase of the slice counter (by exactly one).

In particular, the momentary increase of the (mechanical) load of the drive unit may lead to a pulse of the motor power, notably the motor current. The control unit may be configured to increase the slice counter, in particular by (exactly) one, in reaction to detecting a pulse within the motor current.

Alternatively, or in addition, the momentary increase of the (mechanical) load of the drive unit may lead to a (negative) pulse of the rotational speed of the motor shaft. The control unit may be configured to determine speed information regarding the rotational speed of the slicing tool based on the sensor data of the position sensor of the motor shaft. Furthermore, the control unit may be configured to detect a momentary, in particular periodic, decrease of the rotational speed of the slicing tool based on the speed information. In addition, the control unit may be configured to increase the slice counter, notably by (exactly) one, in reaction to detecting a momentary decrease of the rotational speed of the slicing tool.

By taking into account the momentary increase of the (mechanical) load of the drive unit while driving the slicing tool, the slice counter may be updated in a particularly precise manner.

The control unit may be configured to predict the angular distance that the slicing tool will travel subsequent to causing the drive unit to interrupt driving the slicing tool (i.e., subsequent to stopping operation of the drive unit). The additional angular distance may be caused by the inertia of the slicing tool. The control unit may be configured to determine load data regarding the momentary increase (notably the amplitude of the momentary increase) of the load of the drive unit, which is caused by an interaction between a slicing edge of the slicing tool and the food item. The angular distance may be predicted in a precise manner in dependence of the load data.

Furthermore, the control unit may be configured to cause the drive unit to interrupt driving the slicing tool in dependence of the predicted angular distance. By doing this, the kitchen appliance may be operated in a particularly precise manner (with respect to the number of produced slices).

As indicated above, the kitchen appliance typically comprises an item area for placing the food item. The control unit may be configured to cause the drive unit to interrupt driving the slicing tool in dependence of the drive data, such that the slicing edge of the slicing tool (notably, such that all N slicing edges of the slicing tool) is located outside of the item area, when the slicing tool comes to a stop. By doing this, the comfort-of-use and the precision of the kitchen appliance may be further increased.

According to a further aspect, a kitchen appliance is described, wherein the kitchen appliance comprises a control unit as specified in the present document. Furthermore, the kitchen appliance comprises a slicing tool and a drive unit for driving the slicing tool.

According to another aspect, a method for operating a kitchen appliance is described, wherein the kitchen appliance comprises a drive unit (with an electric motor) configured to drive a slicing tool, wherein the slicing tool is configured to produce slices of a food item. The method comprises capturing drive data with regard to the drive unit while driving the slicing tool, using one or more sensors, and determining slice information with regard to the number of slices that have been produced by the slicing tool, based on the drive data. Furthermore, the method comprises operating the kitchen appliance in dependence of the slice information.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows a block diagram of a kitchen appliance, in particular of a cooking processor;
Figure 1b shows an exemplary drive unit for driving a tool of a kitchen appliance;
Figures 2a and 2b each show exemplary drive data regarding the operation of the drive unit;
Figure 3 illustrates an exemplary angular position of the slicing edge of a slicing tool of the kitchen appliance; and
Figure 4 shows a flow chart of an exemplary method for operating a kitchen appliance.

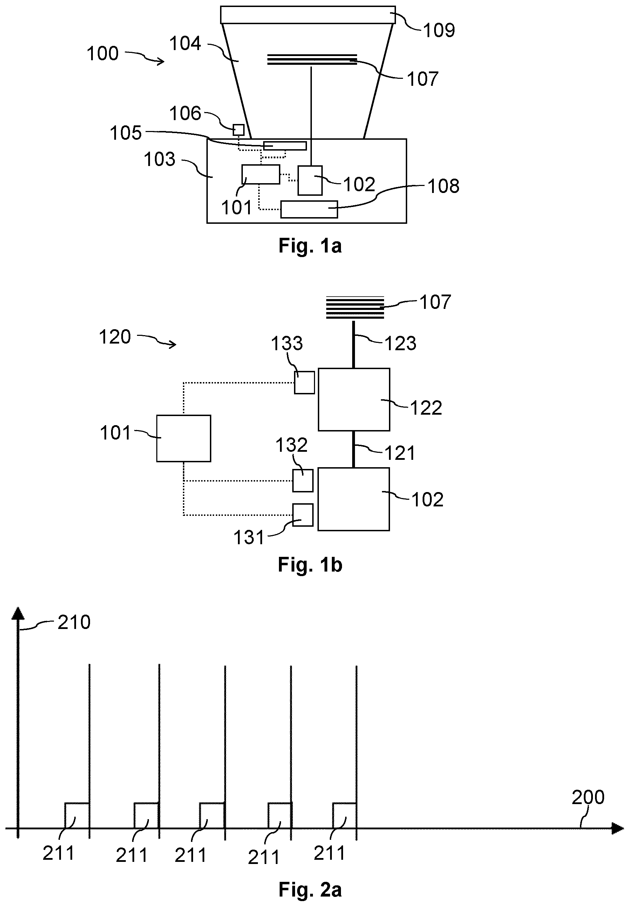

As outlined above, the present document is directed at increasing the comfort-of-use and the precision of the operation of a kitchen appliance. In this context, Fig. 1a shows a block diagram of an exemplary appliance 100 (in particular, a kitchen appliance) which comprises a base unit 103 on which a receptacle 104, in particular a bowl, is placed. The receptacle 104 may be configured to be covered by a lid 109. The base unit 103 comprises a motor 102 which is configured to drive a tool 107 that is located in the receptable 104. The tool 107 may be detachable and/or exchangeable. In particular, the appliance 100 may be configured to be used with an arbitrary tool 107 out of a pre-determined set of different tools 107.

The appliance 100 may comprise a heating unit 106 (which may alternatively, or in addition, be integrated within the receptacle 104) for heating the receptacle 104, e.g., for allowing a food item to be cooked in the receptacle 104. Furthermore, the appliance 100 may comprise a temperature sensor 105 which is configured to provide sensor data regarding the temperature of the food item in the receptacle 104. In addition, the appliance 100 may comprise a user interface 108 which allows a user to interact with the appliance 100, e.g., for activating or for deactivating the motor 102. In addition, the appliance 100 may be connected to the internet, to another appliance and/or to a (smart) device via a (wireless) communication interface such as WLAN or Bluetooth. A control unit 101 of the appliance 100 may be configured to operate the appliance 100, in particular the motor 102 and/or the heating unit 106, in dependence of a user input received via the user interface 108 (of the appliance 100 or of a remote device). The user interface 108 may comprise a display for displaying information to the user of the kitchen appliance 100.

Fig. 1b shows further details regarding the drive unit 120 for driving the tool 107, in particular for causing a rotation of the tool 107. The drive unit 120 comprises the (electric) motor 102 which is configured to cause a rotation of a motor shaft 121. Furthermore, the drive unit 120 may comprise a gear unit 122 which is configured to convert the rotation of the motor shaft 121 into a rotation of a tool shaft 123. The gear unit 122 may be configured to adapt the rotational speed of the motor shaft 121 and of the tool shaft 123 by a pre-determined transmission ratio. Typically, the rotational speed of the tool shaft 123 is smaller than the rotational speed of the motor shaft 121. The transmission ratio may be 2 or more, 5 or more, or 10 or more.

The drive unit 120 may comprise a current sensor 131 which is configured to sense the motor current for driving the motor 102. The level/rate of the motor current may be indicative of the mechanical load which is coupled to the motor shaft 121 and/or the tool shaft 123.

Alternatively, or in addition, the drive unit 120 may comprise a position sensor 132 which is configured to capture sensor data with regard to the angular position of the motor shaft 121. The position sensor 132 may comprise a Hall sensor which is configured to capture the strength of a magnetic field. Furthermore, the motor shaft 121 may comprise one or more magnets (at one or more different angular positions around the motor shaft 121). The position sensor 132 may exhibit a pre-determined angular resolution for determining the angular position of the motor shaft 121. By way of example, the angular resolution may be 360° or finer, or 180° or finer, or 90° or finer, or 60° or finer.

Alternatively, or in addition, the drive unit 120 may comprise a position sensor 133 which is configured to capture sensor data with regard to the angular position of the tool shaft 123. The position sensor 133 may comprise a Hall sensor which is configured to capture the strength of a magnetic field. Furthermore, the tool shaft 123 may comprise one or more magnets (at one or more different angular positions around the tool shaft 123). The position sensor 133 may exhibit a pre-determined angular resolution for determining the angular position of the tool shaft 123. By way of example, the angular resolution may be 360° or finer, or 180° or finer.

An exemplary tool 107 of the kitchen appliance 100 is a slicing tool, which is configured to generate slices of a food item (such as carrots or a cucumber or a piece of meat or salami). The slicing tool 107 may comprise one or more slicing edges (e.g., N sliding edges, with N≥1), wherein each slicing edge is configured to generate (exactly) one slice of the food item. Hence, the slicing tool 107 may be configured to generate N slices of a food item within each full rotation of the slicing tool 107.

The control unit 101 of the kitchen appliance 100 may be configured to update a slice counter which indicates the cumulated number of slices of a food item that have been generated or produced by the slicing tool 107. The slice counter may be updated based on the sensor data (i.e., the drive data) provided by the one or more sensors 131, 132, 133 of the drive unit 120 of the kitchen appliance 100. The slice counter may be reset to zero at the beginning of each operation period of the drive unit 120 (e.g., at each activation of the motor 102).

Fig. 2a shows exemplary sensor data 210 (i.e., drive data) of the position sensor 133 of the gear unit 122 as a function of time 200. The position sensor 133 may be configured to generate a pulse 211 for each full rotation of the tool shaft 123. This sensor data 210 may be used to update the slice counter. By way of example, the slice counter may be increased by the value N (which is the number of slices that are generated by the slicing tool 107 within each full rotation) at each pulse 211 of the position sensor 133 of the gear unit 122.

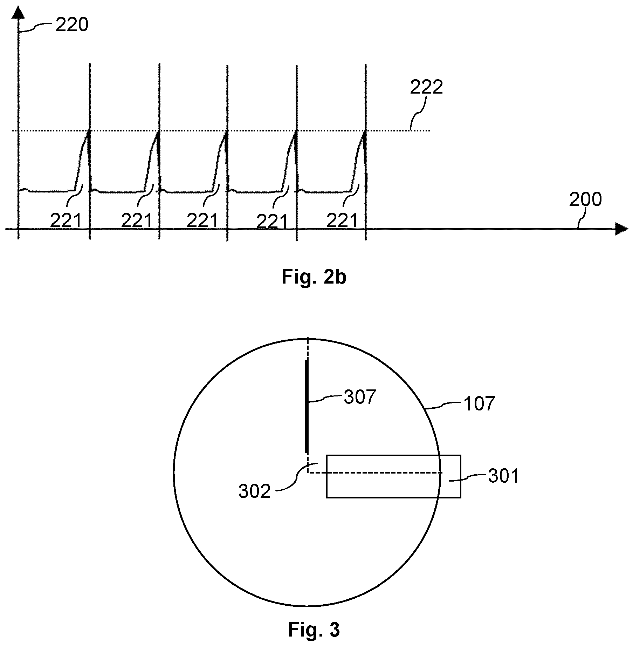

Fig. 2b shows exemplary sensor data 220 (i.e., drive data) of the current sensor 131 of the motor 102. Typically, the interaction of a slicing edge with a food item (for generating a slice of the food item) leads to a momentary increase of the mechanical load at the motor shaft 121, wherein this momentary load increase translates into a corresponding increase, notably a pulse 221, of the drive current of the motor 102. Hence, a pulse 221 of the motor current of the motor 102 (as indicated by the sensor data 220 of the current sensor 131) corresponds to a slice that has been produced by the slicing tool 107. Consequently, the slice counter may be increased by 1 at each pulse 221 of the motor current of the motor 102.

Due to the fact that the gear unit 122 typically reduces the rotational speed of the tool shaft 123 with regard to the rotational speed of the motor shaft 121 by a transmission ratio M, a full rotation of the tool shaft 123 corresponds to M rotations of the motor shaft 121. Furthermore, the position sensor 132 for the motor shaft 121 may have a resolution of Q pulses per full rotation of the motor shaft 121, with Q≥1, or Q≥2 or Q≥4 or Q≥6. By consequence, a full rotation of the tool shaft 123 may correspond to Q*M pulses of the position sensor 132 of the motor shaft 121, wherein e.g., Q*M≥100. As a result of this, the pulses of the position sensor 132 of the motor shaft 121 may be used to determine the rotational speed of the motor shaft 121. Furthermore, the pulses of the position sensor 132 of the motor shaft 121 may be used to determine the angular position of the tool shaft 123 in a precise manner (i.e., with a relatively high angular resolution).

An increase of the load of the motor shaft 121 (due to the interaction of a slicing edge of the slicing tool 107 with a food item) typically leads to a momentary decrease of the rotational speed of the motor shaft 121. Hence, the rotational speed of the motor shaft 121 comprises negative pulses (which correspond to a momentary decrease of the rotational speed), wherein each pulse corresponds to the production of one slice. Consequently, the slice counter may be increased by one at each (negative) pulse of the rotational speed of the motor shaft 121.

One or more of the above-mentioned schemes may be used (possibly in combination) for updating the slice counter in a precise and reliable manner.

The control unit 101 may be configured to output the value of the slice counter via the user interface 108 of the kitchen appliance. Alternatively, or in addition, the control unit 101 may be configured to operate the tool 107, in particular to stop operation of the tool 107, in dependence of the value of the slice counter (e.g., when a pre-determined target value of the slice counter is reached). By way of example, the user of the appliance 100 may enter a target value for the number of slices of a food item via the user interface 108. The kitchen appliance 100 may then be operated to generate slices. Furthermore, the kitchen appliance 100 may be configured to automatically stop operation, once the slice counter has reached the target value.

As illustrated in Fig. 3, the slicing tool 107 typically has at least one slicing edge 307. The slicing tool 107 is rotated about the rotational axis (which is perpendicular to the image plane). The food item may be positioned within an item area 301 (which is located in a first angular region (e.g., around 0° in Fig. 3). A slice of the food item is generated each time that the slicing edge 307 of the tool 107 passes by the item area 301. The control unit 101 may be configured to stop rotation of the tool 107 such that once the tool 107 has stopped rotating, the slicing edge 307 of the tool 107 is located outside of the item area 301. For this purpose, the motor 102 may be operated in dependence of the sensor data (i.e., the drive data) of the position sensor 132 of the motor shaft 121. By stopping the tool 107 in a defined position (within which the N slicing edges 307 are all located outside of the item area 301), the number of produced slices may be set in a particularly precise manner. Furthermore, it may be ensured that the food item can be withdrawn from the item area 301 of the kitchen appliance 100 in a reliable manner (without being stuck within a slicing edge 307 of the tool 107).

The tool 107 may exhibit a certain mechanical inertia when stopping operation of the motor 102. The control unit 101 may be configured to predict the angular distance that the tool 107 will travel, subsequent to interrupting the operation of the motor 102. The angular distance may comprise a multiple of 360° (i.e. of one or more full rotations) and/or a fraction of 360° (i.e. a fraction of a rotation). The angular distance may be predicted based on the rotational speed of the tool 107 and/or based on the load that is caused by each generation of a slice of the food item. The load may be determined based on the sensor data 210, 220 (i.e. the drive data) of the one or more sensors 131, 132, 133 of the drive unit 200, e.g., based on the amplitude 222 of the current pulses 221 of the motor current of the motor 102.

The predicted angular distance may be used to predict the number R of slices which are generated subsequent to interrupting the operation of the motor 102. If the target value of slices is T, the operation of the motor 102 may be interrupted, once the slice counter has reached the value T minus R. By doing this, it may be ensured that the target value of slices is reached in a particularly precise manner.

Hence, a user may be enabled to set a target value T for the number of slices of a food item via the user interface 108 of the kitchen appliance 100. Based on drive data regarding the rotations of the tool shaft 123 and/or of the motor current, the control unit 101 of the appliance 100 may determine the number of slices that have been made. The user may be informed via the user interface 108, once the target value T has been reached.

The kitchen appliance 100, notably the control unit 101, may be configured to detect that a food item is pressed against the item area 301 of the kitchen appliance 100. This may be detected e.g., based on the sensor data of a pressure sensor and/or of an optical sensor. In reaction to detecting that a food item is pressed against the item area 301, the motor 102 may be started automatically in order to actuate the slicing tool 107 and to thereby generate slices of the food item. Operation of the motor 102 may be stopped automatically, once the (predicted and/or extrapolated) number of slices reaches the target value.

The provision of a slice counter enables a user to prepare food in a particularly precise manner (e.g., for a defined number of people). As a result of this, food consumption can be predicted/planned and therefore food rests (waste) may be reduced or even prevented.

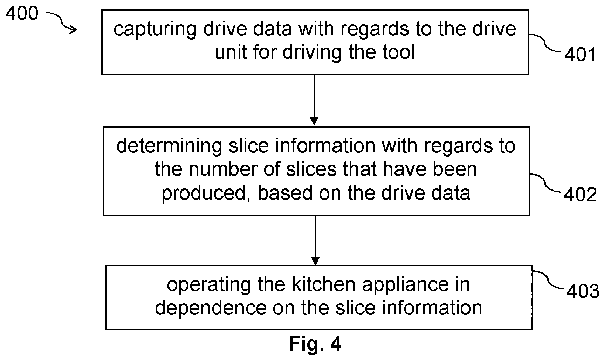

Fig. 4 shows a flow chart of an exemplary (possibly computer-implemented) method 400 for operating a kitchen appliance 100. The method 400 may be executed by a control unit 101 of the kitchen appliance 100. The kitchen appliance 100 comprises a drive unit 120 which is configured to drive a slicing tool 107. In particular, the drive unit 120 may cause the slicing tool 107 to rotate. The slicing tool 107 is configured to produce slices of a food item. The slicing tool 107 may exhibit N slicing edges 307 (e.g., N knifes or blades) which are positioned at N different angular positions around the rotational axis of the slicing tool 107. The slicing tool 107 may be configured to produce a slice of the food item each time that a slicing edge 307 of the slicing tool 107 passes by or passes through the item area 301 of the kitchen appliance 100, within which the food item is placed.

The method 400 comprises capturing 401 drive data with regard to the drive unit 120 while driving the slicing tool 107 (i.e., while causing a rotation of the slicing tool 107), using one or more sensors 131, 132, 133. The drive data may be indicative of the position of a shaft 121, 123 of the drive unit 120 (as a function of time). Alternatively, or in addition, the drive data may be indicative of the electric power, notably the electric current, which is provided to the motor 102 of the drive unit 120 while driving the slicing tool 107.

Furthermore, the method 400 comprises determining 402 slice information with regard to the number of slices that have been produced by the slicing tool 107 (since the start of operation of the kitchen appliance 100), based on the drive data. The slice information may comprise a slice counter which is indicative of the cumulated number of slices that have been produced by the slicing tool 107 (since the start of operation of the kitchen appliance 100).

The method 400 further comprises operating 403 the kitchen appliance 100 in dependence of the slice information. In particular, the slice information, notably the slice counter, may be displayed on a display of the user interface 108 of the kitchen appliance 100. Alternatively, or in addition, the operation of the slicing tool 107 may be stopped automatically in dependence of the slice information, in particular, in dependence of the value of the slice counter.

By operating a kitchen appliance 100 in dependence of slice information, the comfort-of-use and the efficiency of the kitchen appliance 100 may be improved.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control unit (101) for a kitchen appliance (100); wherein the kitchen appliance (100) comprises a drive unit (120) configured to drive a slicing tool (107); wherein the slicing tool (107) is configured to produce slices of a food item; wherein the control unit (101) is configured to
- capture drive data with regard to the drive unit (120) while driving the slicing tool (107), using one or more sensors (131, 132, 133);
- determine slice information with regard to a number of slices that have been produced by the slicing tool (107) based on the drive data; and
- operate the kitchen appliance (100) in dependence of the slice information.

2. The control unit (101) of claim 1, wherein
- the drive unit (120) is configured to drive a rotation of the slicing tool (107);
- the slicing tool (107) is configured to produce N slices of the food item within a rotation of the slicing tool (107), with N≥1;
- the one or more sensors (131, 132, 133) are configured to capture drive data which is indicative of a number of rotations of the slicing tool (107), which are caused by the drive unit (120).

3. The control unit (101) of claim 2, wherein
- the slice information comprises a slice counter indicative of a cumulated number of slices produced by the slicing tool (107); and
- the control unit (101) is configured to increase the slice counter by N, for each full rotation of the slicing tool (107) indicated by the drive data.

4. The control unit (101) of any of claims 2 to 3, wherein the control unit (101) is configured to capture the drive data using
- a position sensor (132) of a motor shaft (121) which is driven by a motor (102) of the drive unit (120), and/or
- a position sensor (133) of a tool shaft (123) of the slicing tool (107), which is driven by the motor shaft (121) via a gear unit (122).

5. The control unit (101) of any previous claim, wherein
- the slicing tool (107) comprises a slicing edge (307) configured to produce a slice of the food item, when the slicing edge (307) interacts with the food item;
- the interaction between the slicing edge (307) of the slicing tool (107) and the food item leads to a momentary increase of a load of the drive unit (120); and
- the drive data is indicative of the load of the drive unit (120) while driving the slicing tool (107).

6. The control unit (101) of claim 5, wherein
- the slice information comprises a slice counter indicative of a cumulated number of slices produced by the slicing tool (107); and
- the control unit (101) is configured to
- detect a pulse (221) within the drive data, which is indicate of a momentary increase of the load of the drive unit (120); and
- increase the slice counter, in particular by one, in reaction to detecting a pulse (221) within the drive data.

7. The control unit (101) of any of claims 5 to 6, wherein the control unit (101) is configured to capture the drive data using
- a position sensor (132) of a motor shaft (121) which is driven by a motor (102) of the drive unit (120); wherein the position sensor (132) exhibits an angular resolution with regard to a rotation of the slicing tool (107), which is 10° or finer; and/or
- a current sensor (131) which is configured to sense a motor current of the motor (102).

8. The control unit (101) of claim 7, wherein the control unit (101) is configured to
- determine speed information regarding a rotational speed of the slicing tool (107) based on sensor data of the position sensor (132) of the motor shaft (121);
- detect a momentary, in particular periodic, decrease of the rotational speed of the slicing tool (107) based on the speed information; and
- increase the slice counter, notably by one, in reaction to detecting a momentary decrease of the rotational speed of the slicing tool (107).

9. The control unit (101) of any previous claims, wherein the control unit (101) is configured to
- determine slice information which comprises a slice counter indicative of a cumulated number of slices produced by the slicing tool (107); and
- output the slice counter via a user interface (108) of the kitchen appliance (100).

10. The control unit (101) of any previous claims, wherein the control unit (101) is configured to
- determine a target value of a number of slices to be produced; and
- cause the drive unit (120) to interrupt driving the slicing tool (107) in dependence of the slice information and in dependence of the target value, in particular if the slice information indicates that the target value of the number of produced slices has been or will be reached.

11. The control unit (101) of any previous claims, wherein the control unit (101) is configured to
- predict an angular distance that the slicing tool (107) will travel subsequent to causing the drive unit (120) to interrupt driving the slicing tool (107); and
- cause the drive unit (120) to interrupt driving the slicing tool (107) in dependence of the predicted angular distance.

12. The control unit (101) of claim 11, wherein the control unit (101) is configured to
- determine load data regarding a momentary increase of a load of the drive unit (120), which is caused by an interaction between a slicing edge (307) of the slicing tool (107) and the food item; and
- predict the angular distance in dependence of the load data.

13. The control unit (101) of any previous claims, wherein
- the kitchen appliance (100) comprises an item area (301) for placing the food item;
- the slicing tool (107) comprises a slicing edge (307) configured to produce a slice of the food item, each time the slicing edge (307) passes through the item area (301) and interacts with the food item that is placed within the item area (301) to produce a slice; and
- the control unit (101) is configured to cause the drive unit (120) to interrupt driving the slicing tool (107) in dependence of the drive data, such that the slicing edge (307) is located outside of the item area (301), when the slicing tool (107) comes to a stop.

14. A kitchen appliance (100) comprising
- a slicing tool (107);
- a drive unit (120) for driving the slicing tool (107); and
- a control unit (101) according to any of the previous claims.

15. A method (400) for operating a kitchen appliance (100); wherein the kitchen appliance (100) comprises a drive unit (120) configured to drive a slicing tool (107); wherein the slicing tool (107) is configured to produce slices of a food item; wherein the method (400) comprises,
- capturing (401) drive data with regard to the drive unit (120) while driving the slicing tool (107), using one or more sensors (131, 132, 133);
- determining (402) slice information with regard to a number of slices that have been produced by the slicing tool (107) based on the drive data; and
- operating (403) the kitchen appliance (100) in dependence of the slice information.
